# EUROPÄISCHE PATENTSCHRIFT

(11) **EP 3 521 657 B1**
(45) Veröffentlichungstag und Bekanntmachung des Hinweises auf die Patenterteilung: **07.06.2023**
(21) Anmeldenummer: 19152048.5
(22) Anmeldetag: 16.01.2019
(51) Int. Cl.: F16G 11/02, B21F 27/00

(54) **VERFAHREN ZUM VERBINDEN VON EINANDER NICHT ÜBERKREUZENDEN SEILEN**
METHOD FOR CONNECTING NON-INTERSECTING CABLES
PROCÉDÉ DE RACCORDEMENT DES CORDES NE SE CROISANT PAS LES UNES AVEC LES AUTRES

(30) Priorität: 01.02.2018 DE 102018000905
(43) Veröffentlichungstag der Anmeldung: 07.08.2019
(73) Patentinhaber: Carl Stahl ARC GmbH, 73079 Süße (DE)
(72) Erfinder: Urbez, Andreas, 73079 Süßen (DE)
(74) Vertreter: Bartels und Partner, Patentanwälte

(56) Entgegenhaltungen:
- EP-A2- 1 536 157
- CN-U- 201 684 871
- CN-U- 202 606 752
- JP-U- S60 106 461
- JP-Y1- S 436 956
- KR-B1- 101 564 397
- US-A- 2 149 209
- US-A- 2 461 030

## Beschreibung

Die Erfindung betrifft ein Verfahren zum Verbinden von einander nicht überkreuzenden Seilen einer flächig ausdehnbaren, flexiblen Netzanordnung mit an vorgebbaren Verbindungsstellen miteinander verbundenen Seilen.

Flächige Netzanordnungen dieser Art sind bekannt. Mit Seilen, wie Drahtseilen oder metallischen Litzen, die unter Bildung rautenförmiger Maschen mittels Seilverbindern miteinander verbunden sind, lassen sich solche Netzanordnungen vorteilhaft beispielsweise als Geländerfüllung, als Absturzsicherung bei Gebäuden, als Schutznetze für Fassadenbegrünungen, für Zoo- und Messearchitektur oder ganz allgemein im Design- und Möbelbereich, ebenso wie für Netze im technischen Bereich, verwenden. Als diesbezüglichen Stand der Technik offenbart das Dokument EP 1 536 157 B1 die Herstellung einer derartigen Netzanordnung durch Festlegen von einander nicht überkreuzenden Seilabschnitten an Verbindungsstellen mittels Seilverbindern, die durch Klemmen gebildet sind, die zum Einlegen miteinander zu verbindender Seilabschnitte eine seitliche Einlegeöffnung aufweisen und die dann für die Fixierung an den Verbindungsstellen derart verpresst werden, dass eine in sich geschlossene Festlegehülse oder Pressklemme gebildet wird. Zwar lassen sich mit der durch Verpressen gebildeten geschlossenen Hülsenform der Seilverbinder hohe Klemm- und Verbindungskräfte an den einander benachbart angeordneten Seilabschnitten erreichen, die Montage und damit die Herstellung der Netzanordnung als Ganzes gestalten sich jedoch sehr aufwändig und zeitraubend. Bei den in Frage kommenden, üblichen Maschenweiten müssen pro m² der herzustellenden Netzanordnung etwa 1800 Verbindungsstellen durch Zusammenbringen von Seilabschnitten, Einlegen der Seilabschnitte in den zuordenbaren Seilverbinder und jeweiliges Durchführen eines Pressvorganges am Seilverbinder gebildet werden.

Die US 2 461 030 und die US 2 149 209 beschreiben jeweils einen Seilverbinder, der als Stanz- oder Tiefziehteil aus einem ebenen Blechzuschnitt, insbesondere aus einem Coil, erhalten ist, wobei die beiden gegenüberliegenden, geradlinig verlaufenden Ränder unter Bilden von zwei gleich groß dimensionierten Seilaufnahmen derart aufeinander zugestellt sind, dass bis auf eine geradlinig verlaufende Längsnaht zwischen diesen beiden Rändern und den beiden Stirnseiten ein nach außen hin geschlossener einstückiger Verbindungskörper gebildet ist, und wobei die Längsnaht zumindest teilweise von einer Schweißnaht verschlossen ist.

Ein weiterer Seilverbinder geht aus der JP S60-106461 hervor.

Im Hinblick auf diese Problematik stellt sich die Erfindung die Aufgabe, ein Verfahren anzugeben, das eine besonders rationelle und dadurch kostengünstige Herstellung von Netzanordnungen mit sich nicht überkreuzenden Seilen ermöglicht.

Erfindungsgemäß ist diese Aufgabe durch das im Patentanspruch 1 angegebene Verfahren gelöst, das durch die folgenden Schritte gekennzeichnet ist:
- Bereitstellen fertig hergestellter Seilverbinder, die, als Stanz- oder Tiefziehteil konzipiert, mit ihren auf eine Längsnaht zugestellten Endrändern zwei nebeneinanderliegende Seilaufnahmen begrenzen,
- Auffädeln der einzelnen Seilverbinder auf parallel zueinander verlaufenden Seilen derart, dass zumindest eine Seilaufnahme eines Seilverbinders mit einer Seilaufnahme eines entlang des Seilverlaufs nachfolgenden und quer versetzten Seilverbinders in Deckung kommt,
- Positionieren der in Seilquerrichtung verlaufenden Reihen der Seilverbinder auf den parallel zueinander verlaufenden Seilen an den in Seillängsrichtung einen Abstand zueinander aufweisenden Verbindungsstellen,
- Verpressen der Seilverbinder zur Fixierung derselben auf den aufgenommenen Seilen an den Verbindungsstellen, und
- Beabstanden der Verbindungsstellen der Seile voneinander unter Bildung der Netzanordnung.

Dadurch, dass die Seilverbinder in dem Fertigungszustand bereitgestellt werden, bei dem die Längsränder des Stanz- oder Tiefziehteils bereits aufeinander zugestellt sind, so dass eine die Seilaufnahmen umfänglich begrenzende Hülse gebildet ist, eröffnet sich die Möglichkeit, die bislang umständlichen und besonders zeitraubenden Arbeitsschritte des Zusammenfassens und Einbringens der Seile in die Seilaufnahmen deutlich zu vereinfachen. Bei in die Hülsenform gebrachten Seilverbindern können sämtliche für eine herzustellende Netzanordnung benötigten Seilverbinder auf in Parallelanordnung befindliche Seile aufgefädelt werden. Dies lässt sich schnell und bequem manuell bewerkstelligen, kann jedoch auch mit verhältnismäßig geringem Vorrichtungsaufwand maschinell durchgeführt werden. Durch Verschieben der in Seillängsrichtung aufeinanderfolgenden Reihen, die jeweils mit versetzt angeordneten Seilverbindern bestückt sind, in Seillängsrichtung lassen sich nun Seilverbinderzeilen in die Position bringen, in der sie, bezogen auf die Seillänge, sich in gewünschtem Maschenabstand befinden, wo sie durch Verpressen fixierbar sind. Durch Herstellen der quer zu den Seillängen gemessenen Maschenweite, also durch Auseinanderziehen, ist nunmehr die Netzanordnung ausbildbar. Nach dem erfindungsgemäßen Verfahren lassen sich auch verhältnismäßig großflächige Netzanordnungen rationell und kostengünstig herstellen.

Mit Vorteil werden die einzelnen Seilverbinder derart auf die parallel zueinander verlaufenden Seile aufgefädelt, dass in alternierender Folge die in Reihen längs der Seile hintereinander angeordneten Seilverbinder mit ihren Seilaufnahmen jeweils um mindestens einen Seildurchmesser zum Seilverbinder in der jeweils benachbarten Reihe versetzt zueinander angeordnet werden.

Beim Positionieren der Reihen der Seilverbinder auf den parallel zueinander verlaufenden Seilen wird so vorgegangen, dass die in Reihen und Zeilen angeordneten Seilverbinder derart auf Abstand voneinander auf den Seilen festgelegt werden, dass nach Beabstanden der einzelnen Seilabschnitte ein Netz mit rechteck- oder rautenförmigen Netzöffnungen gebildet wird.

Die einzelnen Seilverbinder können als Stanz- oder Tiefziehteil aus einem ebenen Blechzuschnitt, insbesondere aus einem Coil, erhalten werden, wobei die beiden einander gegenüberliegenden, geradlinig verlaufenden Ränder unter Bilden der beiden gleich groß dimensionierten Seilaufnahmen aufeinander zugestellt werden, so dass bis auf eine geradlinig verlaufende Längsnaht zwischen diesen beiden Rändern und den freien Stirnseiten ein nach außen hin geschlossener einstückiger Verbindungskörper gebildet wird.

Bei den so gebildeten hülsenartigen Seilverbindern kann die geradlinig verlaufende Längsnaht vor dem jeweiligen Auffädeln oder nach dem Verpressen an den Verbindungsstellen des Netzes mittels eines Schweißverfahrens zumindest teilweise geschlossen und dadurch die beiden Ränder des Seilverbinders fest miteinander verbunden werden. Nach dem Verpressen bilden die Seilverbinder dadurch Pressklemmen in geschlossener Hülsenanordnung, mit denen sich sehr hohe Klemm- und Verbindungskräfte auf die einander benachbart angeordneten Seilabschnitte ausüben lassen.

Mit Vorteil kann als Schweißverfahren ein Laserschweißverfahren, frei von Zusatzwerkstoffen, eingesetzt werden, wobei vorzugsweise eine Laser-Punktschweißung durchgeführt wird.

Gegenstand der Erfindung ist auch ein Seilverbinder, der insbesondere für ein Verfahren nach einem der Patentansprüche 1 bis 6 eingesetzt ist und der die Merkmale des Patentanspruchs 7 aufweist.

Vorteilhafte Ausgestaltungen des Seilverbinders sind in sich anschließenden, weiteren Unteransprüchen angegeben.

Nachstehend ist die Erfindung anhand der beigefügten Zeichnungen im Einzelnen erläutert. Es zeigen:
- Fig. 1: einen Ausschnitt aus einer Netzanordnung, bestehend aus einzelnen Seilabschnitten eines Seiles;
- Fig. 2 und 3: perspektivische Schrägansichten zweier Ausführungsformen von Seilverbindern, die zur Herstellung der Netzanordnung gemäß Fig. 1 mittels des erfindungsgemäßen Verfahrens eingesetzt sind;
- Fig. 4 und 5: Draufsichten der Seilverbinder von Fig. 2 und 3 ohne bzw. mit in deren Seilaufnahmen eingelegten Seilabschnitten;
- Fig. 6 und 7: eine perspektivische Schrägansicht bzw. Vorderansicht zweier im Seilverbinder von Fig. 2 aufgenommener Seilabschnitte;
- Fig. 8: eine Schnittdarstellung entsprechend der Schnittlinie VIII-VIII von Fig. 7; und
- Fig. 9: eine perspektivische Schrägansicht eines Teilausschnittes einer Anordnung paralleler Seilabschnitte mit in versetzten Reihen darauf aufgefädelten Seilverbindern.

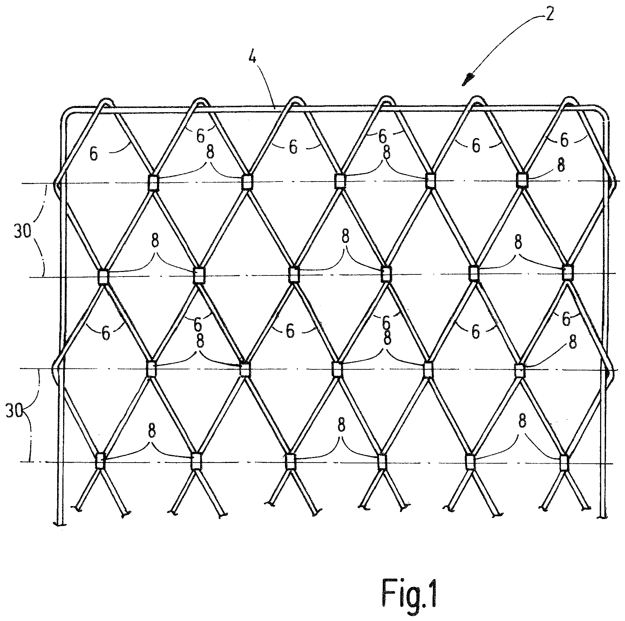

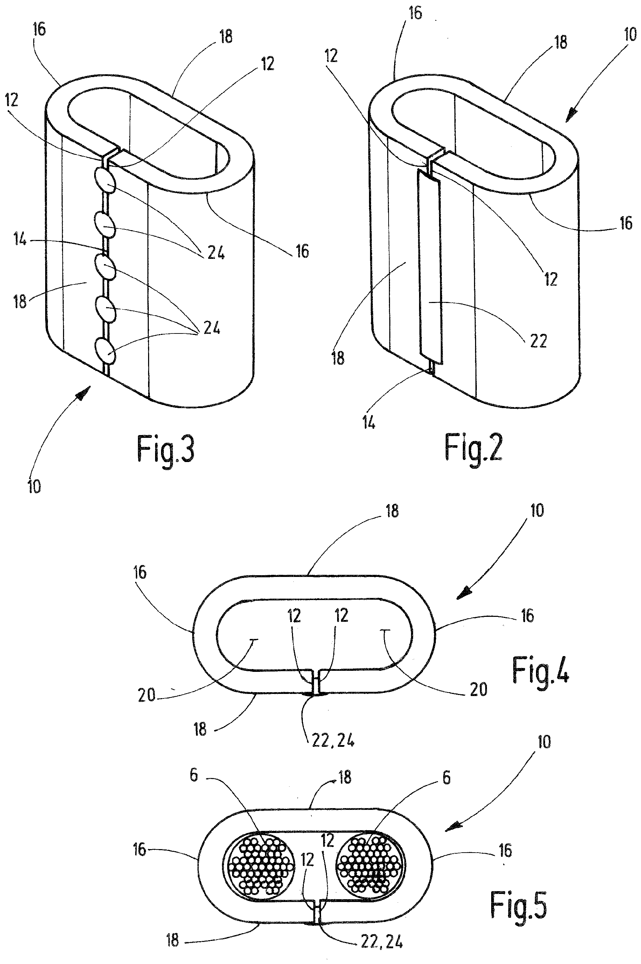

Die Fig. 1 zeigt einen Ausschnitt einer als Ganzes mit 2 bezeichneten, flächig ausgedehnten, flexiblen Netzanordnung. Um das Netz zu fixieren, ist die Netzanordnung 2 um einen Rahmen 4 herumgeschlungen, der Bestandteil eines Möbelstücks oder eines Bauwerks sein kann. Insbesondere lassen sich solche Seilanordnungen als Geländerfüllung, als Absturzsicherung bei Gebäuden, als Schutznetze für Zoo- und Messearchitektur oder für Netze im technischen Bereich verwenden. Das gezeigte Netz ist aus einzelnen Seilabschnitten 6 (in Fig. 1 nur teilweise beziffert) mindestens eines Seiles gebildet, wobei benachbarte, nicht überkreuzende Seilabschnitte 6 unter Bildung von knotenartigen Verbindungsstellen 8 mittels Seilverbindern 10 aneinander festgelegt sind, deren Bauweise am deutlichsten den Fig. 3 bis 5 entnehmbar ist.

Die Fig. 2 bis 4 zeigen zwei Ausführungsformen der Seilverbinder 10 in dem Fertigungszustand, in dem sie für das Auffädeln auf Seilabschnitte 6 bereitgestellt sind. Beide Ausführungsformen der Fig. 2 und 3 sind als Stanz- oder Ziehteil aus einem Blechzuschnitt gebildet, dessen Endränder 12 auf eine zwischen ihnen befindliche Längsnaht 14 zugestellt sind. Bei rechteckiger Form des Zuschnitts verläuft diese Längsnaht 14, wie in Fig. 2 und 3 gezeigt, geradlinig zwischen den Schmalseiten 16 des gebildeten, hülsenartigen Verbindungskörpers. Bei von der Rechteckform abweichendem Umriss des Blechzuschnitts könnte sich die Naht 14 auch zu den Schmalseiten 16 schräg erstrecken oder könnte im Verlauf nicht geradlinig sein. Die Schmalseiten 16 schließen sich mit kreisbogenförmigem Verlauf an die Enden der ebenflächigen Breitseiten 18 an. Die Längsnaht 14 ist durch Laserschweißen teilweise verschlossen, wobei bei der Ausführungsform von Fig. 2 eine sich über einen Großteil der Längsnaht 14 durchgehend erstreckende Schweißnaht 22 gebildet ist. Bei der Ausführungsform von Fig. 3 sind durch Punktschweißen Schweißpunkte 24 gebildet.

Der Innenraum des gebildeten Hülsenkörpers, dessen Querschnittsform der Form des äußeren Umrisses der Seilverbinder 10 entspricht, bildet zwei nebeneinanderliegende, gleich große Seilaufnahmen 20 (Fig. 4). In Anpassung an den Seildurchmesser der aufzunehmenden Seilabschnitte 6 ist die Dimensionierung des Innenraums des Hülsenkörpers und der Seilaufnahmen 20 derart gewählt, dass die Seilverbinder 10 hemmungsfrei auf nebeneinander parallel verlaufende Seilabschnitte 6 auffädelbar sind, so dass bei vertikal gestellten Seilabschnitten 6 die Seilverbinder 10 beim Auffädeln durch Schwerkraft selbsttätig in aneinanderliegende Position gleiten. Das Bestücken von Seilabschnitten 6 durch Auffädeln gestaltet sich daher besonders einfach durch Platzieren der Seilverbinder 10 am oberen Ende von Seilpaaren, beispielsweise durch manuelles Aufsetzen. Bei in Reihe angeordneten Seilabschnitten 6 kann auch eine maschinelle Bestückung vorgesehen sein, indem zu einem Aufsetzkopf (nicht dargestellt), der entlang der Enden der Seilreihe verfährt, Seilverbinder 10 aus einem Vorrat heraus mittels eines Teilevereinzelners bekannter Art zugeführt werden. Wie die Fig. 5 zeigt, in der ein Seilverbinder 10 mit in den Seilaufnahmen 20 befindlichen Seilabschnitten 6 vor dem Verpressen dargestellt ist, ist der Innenraum des Hülsenkörpers derart bemessen, dass zwischen dem jeweiligen, aufgenommenen Paar der Seilabschnitte 6 ein Abstand besteht, der mindestens dem Zweifachen der Wandstärke des Seilverbinders 10 entspricht, siehe Fig. 5.

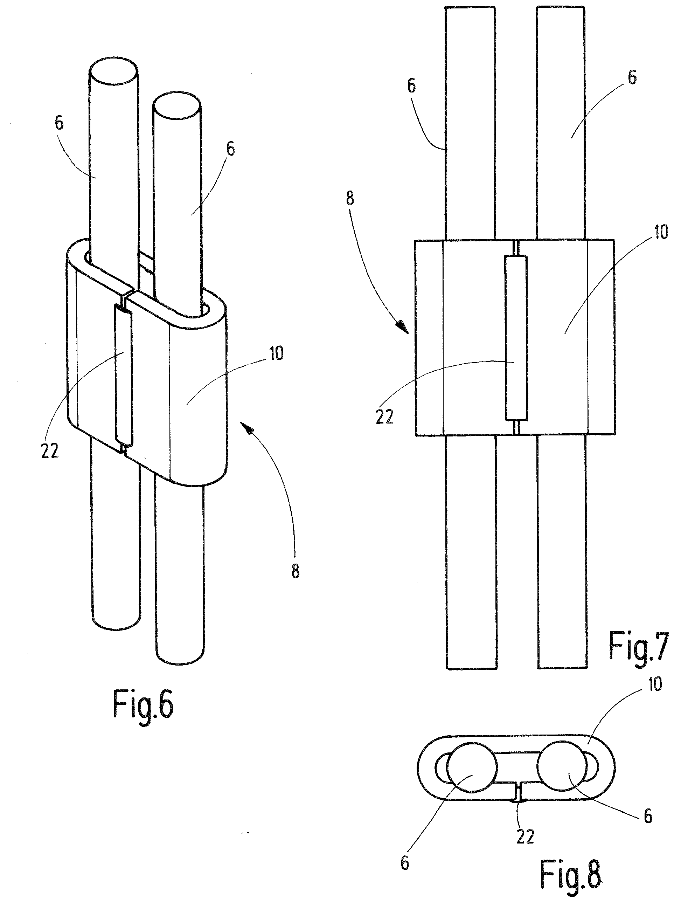

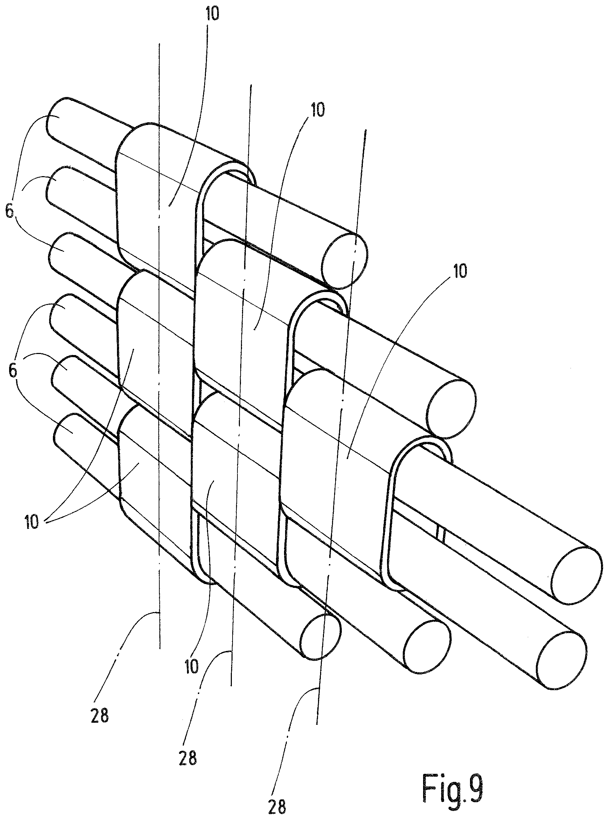

Die Fig. 9 zeigt von der Vielzahl der für eine Netzanordnung 2 benötigten Seilabschnitte 6 einen Teilausschnitt mit lediglich sechs parallel verlaufenden Seilabschnitten 6, die mit aufgefädelten Seilverbindern 10 bestückt sind, von denen lediglich sechs Seilverbinder 10 dargestellt sind. Wie gezeigt, sind die Seilverbinder 10 in zur Seillängsrichtung senkrecht verlaufenden, aufeinanderfolgenden Reihen 28 angeordnet. Dabei sind die Seilverbinder 10 in jeder Reihe 28 gegenüber den Seilverbindern 10 in der jeweils angrenzenden Reihe 28 um je einen Seildurchmesser versetzt. Ausgehend von dieser in Fig. 9 gezeigten Anordnung mit noch nicht verpressten Seilverbindern 10 wird für die Ausbildung der Netzanordnung 2 nunmehr so vorgegangen, dass die Reihen 28 durch Verschieben in Seillängsrichtung in solche Abstände voneinander gebracht werden, in der sie auf die Position der in Fig. 1 mit 30 bezeichneten Zeilen ausgerichtet sind. In dieser Position werden die Verbinder 10 nunmehr verpresst, so dass jeder Seilverbinder 10, wie dies in Fig. 6 bis 8 dargestellt ist, eine Verbindungsstelle 8 bildet, die ein sie nicht berührendes Paar Seilabschnitte 6 fixiert. Um die Netzanordnung 2 flächig auszubilden, werden nunmehr die Seilabschnitte 6 auseinandergezogen, indem die Verbindungsstellen 8 entlang der Zeilen 30 in Abstand zueinander gebracht werden.

## Patentansprüche

1. Verfahren zum Verbinden von einander nicht überkreuzenden Seilen (6) einer flächig ausdehnbaren, flexiblen Netzanordnung (2) mit an vorgebbaren Verbindungsstellen (8) miteinander verbundenen Seilen (6), **gekennzeichnet durch** die folgenden Schritte:
- Bereitstellen fertig hergestellter Seilverbinder (10), die, als Stanz- oder Tiefziehteil konzipiert, mit ihren auf eine Längsnaht (14) zugestellten Endrändern (12) zwei nebeneinanderliegende Seilaufnahmen (20) begrenzen;
- Auffädeln der einzelnen Seilverbinder (10) auf parallel zueinander verlaufenden Seilen (6) derart, dass zumindest eine Seilaufnahme (20) eines Seilverbinders (10) mit einer Seilaufnahme (20) eines entlang des Seilverlaufs nachfolgenden und quer versetzten Seilverbinders (10) in Deckung kommt;
- Positionieren der in Seilquerrichtung verlaufenden Reihen (28) der Seilverbinder (10) auf den parallel zueinander verlaufenden Seilen (6) an den in Seillängsrichtung einen Abstand zueinander aufweisenden Verbindungsstellen (8);
- Verpressen der Seilverbinder (10) zur Fixierung derselben auf den aufgenommenen Seilen (6) an den Verbindungsstellen (8); und
- Beabstanden der Verbindungsstellen (8) der Seile (6) voneinander unter Bildung der Netzanordnung (2).

2. Verfahren nach Anspruch 1, **dadurch gekennzeichnet, dass** die einzelnen Seilverbinder (10) derart auf die parallel zueinander verlaufenden Seile (6) aufgefädelt werden, dass in alternierender Folge die in Reihen (28) längs der Seile (6) hintereinander angeordneten Seilverbinder (10) mit ihren Seilaufnahmen (20) jeweils um mindestens einen Seildurchmesser zum Seilverbinder (10) in der jeweils benachbarten Reihe (28) versetzt zueinander angeordnet werden.

3. Verfahren nach Anspruch 1 oder 2, **dadurch gekennzeichnet, dass** die in Reihen (28) und Zeilen (30) angeordneten Seilverbinder (10) derart auf Abstand voneinander auf den Seilen (6) festgelegt werden, dass nach Beabstanden der einzelnen Seilabschnitte (6) ein Netz mit rechteck- oder rautenförmigen Netzöffnungen gebildet wird.

4. Verfahren nach einem der vorstehenden Ansprüche, **dadurch gekennzeichnet, dass** die einzelnen Seilverbinder (10) als Stanz- oder Tiefziehteil aus einem ebenen Blechzuschnitt, insbesondere aus einem Coil, erhalten werden und dass die beiden einander gegenüberliegenden, geradlinig verlaufenden Ränder (12) unter Bilden der beiden gleichgroß dimensionierten Seilaufnahmen (20) aufeinander zugestellt werden, so dass bis auf eine geradlinig verlaufende Längsnaht (14) zwischen diesen beiden Rändern (12) und den freien Stirnseiten ein nach außen hin geschlossener einstückiger Verbindungskörper gebildet wird.

5. Verfahren nach einem der vorstehenden Ansprüche, **dadurch gekennzeichnet, dass** die geradlinig verlaufende Längsnaht (14) eines Seilverbinders (10) vor dem jeweiligen Auffädeln oder nach dem Verpressen an den Verbindungsstellen (8) des Netzes (2) mittels eines Schweißverfahrens zumindest teilweise geschlossen und die beiden Ränder (12) des Seilverbinders (10) fest miteinander verbunden werden.

6. Verfahren nach einem der vorstehenden Ansprüche, **dadurch gekennzeichnet, dass** als Schweißverfahren ein Laserschweißverfahren, frei von Zusatzwerkstoffen, eingesetzt wird und dass vorzugsweise eine Laser-Punktschweißung (24) durchgeführt wird.

7. Seilverbinder, insbesondere eingesetzt für ein Verfahren nach einem der vorstehenden Ansprüche, wobei der Seilverbinder als Stanz- oder Tiefziehteil aus einem ebenen Blechzuschnitt, insbesondere aus einem Coil, erhalten ist, wobei die beiden gegenüberliegenden, geradlinig verlaufenden Ränder (12) unter Bilden von zwei gleich groß dimensionierten Seilaufnahmen (20) derart aufeinander zugestellt sind, dass bis auf eine geradlinig verlaufende Längsnaht (14) zwischen diesen beiden Rändern (12) und den beiden Stirnseiten ein nach außen hin geschlossener einstückiger Verbindungskörper gebildet ist, und wobei die Längsnaht (14) zumindest teilweise von einer Schweißnaht (24) verschlossen ist, **dadurch gegenzeichnet,** dass die Schweißnaht (24) mittels eines Lasers hergestellt und als Punktschweißung (24) ausgebildet ist.

8. Seilverbinder nach Anspruch 7, dadurch gegenzeichnet, dass er aus einem rechteckförmigen Stanz- oder Tiefziehteil gebildet ist und dass die Längsnaht (14) parallel zu dem jeweiligen Seil (6) zumindest während des Auffädelvorganges auf dieses Seil (6) verläuft.

9. Seilverbinder nach einem der vorstehenden Ansprüche, dadurch gegenzeichnet, dass seine beiden Seilaufnahmen (20) innerhalb des Verbindungskörpers derart voneinander beabstandet sind, dass bei aufgenommenen Seilpaaren (6) zwischen diesen ein kleinstmöglicher Abstand besteht, der mindestens dem Zweifachen der Wandstärke des Verbindungskörpers entspricht.

## Claims

1. Method for connecting cables (6) that do not cross each other in a two-dimensionally extendable, flexible netting arrangement (2) to cables (6) that are connected to one another at pre-definable connecting points (8), **characterised by** the following steps:
- provision of finished cable connectors (10), which, designed as stamped or deep-drawn parts, with their end edges (12) placed on a longitudinal seam (14), delimit two cable holders (20) lying adjacent to one another;
- threading of the individual cable connectors (10) on cables (6) running parallel to one another such that at least one cable holder (20) of a cable connector (10) overlaps a cable holder (20) of a subsequent and transversely offset cable connector (10) along the course of the cable;
- positioning of the columns (28) of cable connectors (10), said columns running in a transverse direction to the cable, on the cables (6) running parallel to one another, at the connecting points (8) which are spaced apart from one another in the longitudinal direction of the cable;
- pressing the cable connectors (10) to fix said cable connectors on the received cables (6) at the connecting points (8); and
- spacing the connecting points (8) of the cables (6) apart from one another to form the netting arrangement (2).

2. Method according to claim 1, **characterised in that** the individual cable connectors (10) are threaded onto the cables (6) running in parallel to one another such that, in an alternating sequence, the cable connectors (10), which are arranged one after the another in columns (28) along the cables (6), with their cable holders (20) are each arranged such that they are offset by at least one cable diameter from the cable connector (10) in the respective adjacent column (28).

3. Method according to either claim 1 or claim 2, **characterised in that** the cable connectors (10) arranged in columns (28) and rows (30) are fixed on the cables (6) at a distance from one another such that, after spacing the individual cable sections (6), a netting with rectangular or diamond-shaped netting openings is formed.

4. Method according to one of the preceding claims, **characterised in that** the individual cable connectors (10) are obtained as a stamped or deep-drawn part from a flat sheet metal blank, especially from a coil, and **in that** the two opposite edges (12) running in a straight line are placed on top of one another to form the two cable holders (20) of equal dimensions such that a one-piece connecting body that is closed to the outside is formed up to a longitudinal seam (14) running in a straight line between these two edges (12) and the free end faces.

5. Method according to one of the preceding claims, **characterised in that**, before the respective threading operation or after pressing on the connecting points (8) of the netting (2), the longitudinal seam (14) of a cable connector (10), said seam running in a straight line, is at least partially closed by means of a welding method and the two edges (12) of the cable connector (10) are securely connected together.

6. Method according to one of the preceding claims, **characterised in that** a laser welding method, free from filler metals, is used as the welding method, and **in that** laser spot welding (24) is preferably performed.

7. Cable connector, particularly used for a method according to any of the preceding claims, wherein the cable connector is obtained as a stamped or deep-drawn part from a flat sheet metal blank, especially from a coil, wherein the two opposite edges (12) running in a straight line are placed on top of one another to form two cable holders (20) of equal dimensions such that a one-piece connecting body that is closed to the outside is formed up to a longitudinal seam (14) running in a straight line between these two edges (12) and the two end faces, and wherein the longitudinal seam (14) is at least partially sealed by a weld seam (24), **characterised in that** the weld seam (24) is produced by means of a laser and designed as a spot weld (24).

8. Cable connector according to claim 7, **characterised in that** it is formed from a rectangular stamped or deep-drawn part and **in that** the longitudinal seam (14) runs parallel to the respective cable (6) at least during the process of threading onto this cable (6).

9. Cable connector according to one of the preceding claims, **characterised in that** its two cable holders (20) are spaced apart from one another inside the connecting body such that, when cable pairs (6) are received between said cable holders, the spacing that arises is as small as possible, corresponding to at least twice the wall thickness of the connecting body.

## Revendications

1. Procédé pour relier des câbles (6) ne se croisant pas les uns avec les autres d'un agencement (2) en réseau souple et extensible à plat, par des câbles (6) reliés entre eux en des points (8) de liaison pouvant être donnés à l'avance, **caractérisé par** les stades suivants :
- on se procure un manchon (10) de jonction fini de fabrication, qui, conçu sous la forme d'une pièce estampée ou à emboutissage profond, délimite par ses bords (12) d'extrémité, tournés vers une jointure (14) longitudinale, deux logements (20) côte à côte de câbles ;
- on enfile les divers manchons (10) de jonction sur des câbles (6) s'étendant parallèlement entre eux, de manière à ce qu'au moins un logement (20) de câble d'un manchon (10) de jonction vienne à recouvrement avec un logement (20) de câble d'un manchon (10) de jonction suivant le long du tracé du câble et décalé transversalement ;
- on met des rangées (28), s'étendant dans la direction transversale de câble, des manchons (10) de jonction en position sur les câbles (6) s'étendant parallèlement entre eux, aux points (8) de liaison ayant une distance les uns par rapport aux autres dans la direction longitudinale du câble ;
- on comprime les manchons (10) de jonction pour les immobiliser sur les câbles (6) reçus aux points (8) de liaison ; et
- on met à distance les points (8) de liaison des câbles (6) avec formation de l'agencement (2) de réseau.

2. Procédé suivant la revendication 1, **caractérisé en ce que** l'on enfile les divers manchons (10) de jonction sur les câbles (6) s'étendant parallèlement les uns aux autres, de manière à ce que, en succession alternée, les manchons (10) de jonction, disposés les uns derrière les autres en rangée (28) le long des câbles (6), soient disposés par leurs logements (20) de câbles en étant décalés les uns par rapport aux autres respectivement d'au moins un diamètre de câble, vers le manchon (10) de jonction dans la rangée (28) voisine respectivement.

3. Procédé suivant la revendication 1 ou 2, **caractérisé en ce que** les manchons (10) de jonction, disposés en rangées (28) et en lignes (30), sont fixés sur les câbles (6) en étant à distance les uns des autres, de manière à former, après avoir mis à distance les divers tronçons (6) de câbles, un réseau ayant des ouvertures de réseau en forme de rectangle ou de losange.

4. Procédé suivant l'une des revendications précédentes, **caractérisé en ce que** l'on obtient les divers manchons (10) de jonction sous la forme d'une pièce estampée ou à emboutissage profond, à partir d'un flan de tôle plan, notamment à partir d'une bobine, et **en ce que** l'on tourne l'un vers l'autre les deux bords (12), opposés l'un à l'autre et s'étendant en ligne droite, avec formation des deux logements (20) de câble de même dimension, de manière à former, à l'exception d'une jointure (14) longitudinale s'étendant en ligne droite entre ces deux bords (12) et les côtés frontaux libres, un corps de liaison d'une seule pièce fermé vers l'extérieur.

5. Procédé suivant l'une des revendications précédentes, **caractérisé en ce que** l'on ferme au moins en partie, au moyen d'un procédé de soudage, la jointure (14) longitudinale s'étendant en ligne droite d'un manchon (10) de jonction, avant l'enfilage respectif ou après la compression aux points (8) de liaison du réseau (2), et on relie fixement entre eux les deux bords (12) du manchon (10) de jonction.

6. Procédé suivant l'une des revendications précédentes, **caractérisé en ce qu'**on utilise comme procédé de soudage, un procédé de soudage par laser sans métal d'apport, et **en ce que** l'on effectue, de préférence, un soudage (24) laser par points.

7. Manchon de jonction à utiliser en particulier pour un procédé suivant l'une des revendications précédentes, dans lequel le manchon de jonction est obtenu sous la forme d'une pièce estampée ou à emboutissage profond, à partir d'un flan de tôle plan, en particulier à partir d'une bobine, dans lequel les deux bords (12), opposés l'un à l'autre et s'étendant en ligne droite, sont tournés l'un vers l'autre avec formation de deux logements (20) de câbles de même dimension, de manière à former, à l'exception d'une jointure (14) longitudinale s'étendant en ligne droite entre ces deux bords (12) et les deux côtés frontaux, un corps de liaison d'une seule pièce fermé vers l'extérieur, et dans lequel la jointure (14) longitudinale est fermée au moins en partie par un cordon (24) de soudure, **caractérisé en ce que** le cordon (24) de soudure est fabriqué au moyen d'un laser et est constitué sous la forme d'une soudure (24) par points.

8. Manchon de jonction suivant la revendication 7, **caractérisé en ce qu'**il est formé d'une pièce rectangulaire estampée ou à emboutissage profond, et **en ce que** la jointure (14) longitudinale s'étend parallèlement au câble (6) respectif, au moins pendant l'opération d'enfilage sur ce câble (6).

9. Manchon de jonction suivant l'une des revendications précédentes, **caractérisé en ce que** ses deux logements (20) de câble sont à distance l'un de l'autre à l'intérieur du corps de liaison, de manière à avoir, lorsque des paires (6) de câbles sont reçues, entre elles une distance aussi petite que possible, qui correspond au moins à deux fois l'épaisseur de paroi du corps de liaison.
